# EUROPÄISCHE PATENTSCHRIFT

(11) **EP 0 670 336 B1**
(45) Veröffentlichungstag und Bekanntmachung des Hinweises auf die Patenterteilung: **02.05.1997**
(21) Anmeldenummer: 95102479.3
(22) Anmeldetag: 22.02.1995
(51) Int. Cl.: C08F 10/00, C08F 4/622

(54) **Geträgerte Metallocenkomplexe mit heterofunktionellen Gruppen am Cyclopentadienylsystem als Katalysatorsysteme**
Supported metallocene complexes with heterofunctional groups on the cyclopentodienyl system for use as catalyst
Complexes de métallocènes comportant des groupes hétérofonctionnels sur le système cyclopentodiényle, sur support, utilisable comme catalyseur

(30) Priorität: 03.03.1994 DE 4406964
(43) Veröffentlichungstag der Anmeldung: 06.09.1995
(73) Patentinhaber: BASF AKTIENGESELLSCHAFT, 67056 Ludwigshafen (DE)
(72) Erfinder: Langhauser, Franz, Dr., D-67098 Bad Dürkheim (DE); Fischer, David, Dr., D-67161 Gönnheim (DE); Kerth, Jürgen, Dr., D-67316 Carlsberg (DE); Schweier, Günther, Dr., D-67159 Friedelsheim (DE); Barsties, Elke, D-78462 Konstanz (DE); Brintzinger, Hans-Herbert, Prof. Dr., CH-8274 Taegerswilen (CH); Schaible, Stefan, D-78462 Konstanz (DE); Roell, Werner, Dr., D-78464 Konstanz (DE)

(56) Entgegenhaltungen:
- EP-A- 0 279 863
- EP-A- 0 571 882
- EP-A- 0 582 195
- JOURNAL OF ORGANOMETALLIC CHEMISTRY, Bd.315, 1986 Seiten 143 - 156 BOOTH BL 'Silica-supported cyclopentadienyl-rhodium, -cobalt, and -titanium complexes'

## Beschreibung

Die vorliegende Erfindung betrifft geträgerte Katalysatorsysteme, erhältlich durch
a) Umsetzung eines feinteiligen Trägers mit einer α-Trisalkoxysilyl-ω-halogenalkyl-Verbindung,
b) Zugabe eines Metallocenkomplexes der allgemeinen Formel I 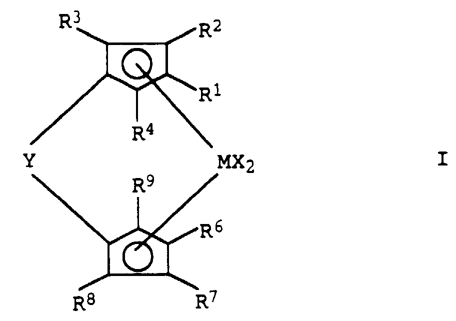 in der die Substituenten folgende Bedeutung haben:
   - M: Titan, Zirkonium, Hafnium, Vanadium, Niob oder Tantal,
   - X: Fluor, Chlor, Brom, Iod, Wasserstoff, C₁- bis C₁₀-Alkyl, C₆- bis C₁₅-Aryl oder -OR⁵,
   wobei
   - R⁵: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
   - R¹ bis R³ und R⁶ bis R⁸: Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁰)₃ mit
   - R¹⁰: C₁- bis C₁₀-Alkyl, C₆- bis C₁₅-Aryl oder C₃- bis C₁₀-Cycloalkyl,
   - R⁴: 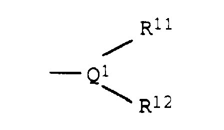
   wobei
   - Q¹: Stickstoff, Phosphor, Arsen, Antimon oder Wismut bedeutet,
   - R¹¹, R¹²: C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest oder die beiden Reste gemeinsam für 2 bis 15 C-Atome aufweisende cyclische Gruppen stehen können, die ihrerseits 1 bis 8 Heteroatome der III. bis VI. Hauptgruppe des Periodensystems der Elemente enthalten können
   - R⁹: Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R¹³)₃ oder 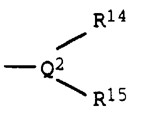
   wobei
   - R¹³: C₁- bis C₁₀-Alkyl, C₆- bis C₁₅-Aryl oder C₃- bis C₁₀-Cycloalkyl bedeutet,
   - Q²: Stickstoff, Phosphor, Arsen, Antimon oder Wismut bedeutet,
   - R¹⁴, R¹⁵: C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest oder die beiden Reste gemeinsam für 2 bis 15 C-Atome aufweisende cyclische Gruppen stehen können, die ihrerseits 1 bis 8 Heteroatome der III. bis VI. Hauptgruppe des Periodensystems der Elemente enthalten können
   - Y: für 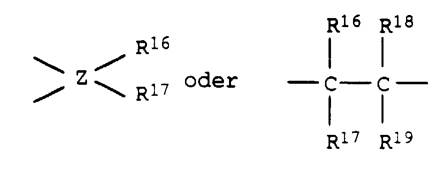
   steht, wobei
   - Z: Silicium, Germanium, Zinn oder Kohlenstoff bedeutet,
   - R¹⁶,R¹⁷,R¹⁸,R¹⁹: Wasserstoff, C₁- bis C₁₀-Alkyl, C₃- bis C₁₀-Cycloalkyl oder C₆- bis C₁₅-Aryl, wobei gegebenenfalls auch zwei benachbarte Reste gemeinsam für 4 bis 15 C-Atome aufweisende cyclische Gruppen stehen können,
c) Umsetzung mit einem quaternisierenden Agens der allgemeinen Formel V

   AₐX² V

   wobei
   - A: C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atome im Arylrest bedeutet
   - X²: Fluor, Chlor, Brom, Jod, SO₃²⁻, SO₄²⁻ oder NO₃⁻
   - a: 1 oder 2
   und
d) gegebenenfalls Zugabe einer offenkettigen oder cyclischen Alumoxanverbindung der allgemeinen Formel VI oder VII 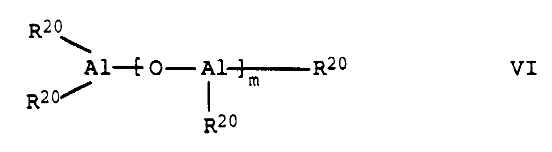 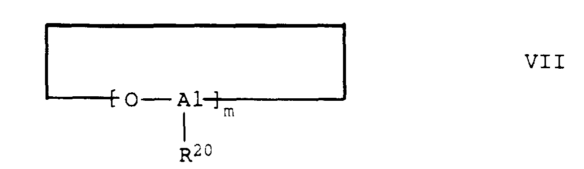 wobei
   - R²⁰: eine C₁- bis C₄-Alkylgruppe bedeutet und
   - m: für eine ganze Zahl von 5 bis 30 steht,
   in der angegebenen Reihenfolge.

Weiterhin betrifft die vorliegende Erfindung Verfahren zur Herstellung derartiger geträgerter Katalysatorsysteme, deren Verwendung zur Polymerisation von Alkenen sowie Verfahren zur Herstellung von Polymerisaten von C₂- bis C₁₀-Alk-1-enen unter Verwendung der erfindungsgemäßen geträgerten Katalysatorsysteme.

Metallocen-Katalysatoren, bei denen eine Zirkonocen- oder Titanocenkomponente und ein Aluminoxan gemeinsam aus einer Lösung durch Tränkung auf einen silikatischen Träger aufgebracht werden, sind in der EP-A 206 794 beschrieben. Die Katalysatorkomponenten sind dabei jedoch inhomogen auf dem Träger verteilt und außerdem nicht ausreichend fest auf dem Träger verankert, so daß sie während der Polymerisation extrahiert werden.

Aus der EP-A 372 414 ist bekannt, daß durch die Einführung von homofunktionellen Gruppen, beispielsweise von Vinylsubstituenten, am Cyclopentadienylrest eines Metallocens die Möglichkeit besteht, eine chemische Fixierung des Metallocens auf einem geeigneten Trägermaterial zu erreichen. Nachteilig hierbei sind die aufwendig und kostspielig herzustellenden Trägermaterialien.

Aufgabe der vorliegenden Erfindung war es daher, ein geträgertes Metallocen-Katalysatorsystem zur Verfügung zu stellen, bei dem der Metallocenkomplex durch chemische Reaktion an einen üblichen Träger gebunden werden kann und das als Katalysator für die Polymerisation von Alkenen Verwendung findet.

Demgemäß werden die eingangs diskutierten geträgerten Katalysatorsysteme gefunden.

Weiterhin wurden Verfahren zur Herstellung derartiger geträgerter Katalysatorsysteme, deren Verwendung zur Polymerisation von Alkenen sowie Verfahren zur Herstellung von Polymerisaten von C₂- bis C₁₀-Alk-1-enen unter Verwendung der erfindungsgemäßen geträgerten Katalysatorsysteme gefunden.

Zur Herstellung der erfindungsgemäßen geträgerten Katalysatorsysteme wird in einer ersten Stufe a) ein feinteiliger Träger mit einer α-Trisalkoxysilyl-ω-halogenalkyl-Verbindung umgesetzt.

Geeignete Trägermaterialien können aus Oxiden der Elemente der III. oder IV. Hauptgruppe des Periodensystems oder deren Mischungen aufgebaut sein. Bevorzugt sind beispielsweise Kieselgele, insbesondere solche der Formel SiO₂ · b Al₂O₃, worin b für eine Zahl im Bereich von 0 bis 2 steht, vorzugsweise 0 bis 0,5; dies sind also Alumosilikate oder Siliciumdioxid. Vorzugsweise weisen die Träger einen Teilchendurchmesser im Bereich von 1 bis 200 µm auf, insbesondere von 30 bis 80 µm. Derartige Produkte sind im Handel erhältlich, z.B. Silica Gel 332 der Fa. Grace, Kieselgel 60 der Fa. Merck oder Kieselgel der Fa. Baker.

Als α-Trisalkoxysilyl-ω-halogenalkyl-Verbindungen werden bevorzugt

Si(OR²¹)₃-R²²-R²³X³ VIII

eingesetzt,
wobei
- R²¹: für C₁- bis C₁₀-Alkyl, insbesondere für Methyl oder Ethyl steht oder für C₆- bis C₁₅-Aryl, vorzugsweise für Phenyl
- R²²: eine -(CH₂)ₙ-Gruppe bedeutet oder eine C₆- bis C₁₅-Arylgruppe, die gegebenenfalls 1- bis 4-fach durch C₁- bis C₄-Alkyl substituiert sein kann, insbesondere 1,4-Phenyl
worin
- n: für ganze Zahlen von 3 bis 10 steht
- R²³: C₁- bis C₁₀-Alkyl bedeutet, vorzugsweise Methyl
und
- X³: für Fluor, Chlor, Brom oder Jod steht, insbesondere für Chlor.

Bevorzugt wird als Verbindung VIII (Chloromethyl)phenyltrimethoxysilan eingesetzt.

Die Trägermaterialien können zur Vorbereitung beispielsweise mit 3-Halogenpropyl-1-triethoxysilan umgesetzt werden, wie in J. S. Fritz, J.N. King, Anal. Chem., Vol. 48 (1976), S. 570-572 und W.A. Aue, C.R. Hastings, J. Chromatog. 42 (1969), S. 319-335, beschrieben. Die Umsetzung des Trägers mit einer α-Trisalkoxysilyl-ω-halogenalkyl-Verbindung ist an sich bekannt und beispielsweise in P. Tundo, P. Venturello, J. Am. Chem. Soc. 101 (1979), S. 6606-6613 und P. Tundo, P. Venturello, J. Am. Chem. Soc. 104 (1982), S. 6547-6551, beschrieben. Um eventuell verbleibende OH-Gruppen auf dem Träger zu maskieren, kann nach J. Köhler et al. J. Chromatog. 352 (1986), S. 275-305, mit beispielsweise Trimethylchlorsilan nachbehandelt werden.

Allerdings können solche funktionalisierten Träger, wie sie in der Stufe a) entstehen, auch käuflich erworben werden, z.B. 3-Chloropropyl-funktionalisiertes Kieselgel der Fa. Aldrich.

In einer zweiten Stufe b) wird nun zu dem nach Stufe a) funktionalisierten Träger ein Metallocenkomplex der allgemeinen Formel I zugegeben.

Von den Metallocenkomplexen der allgemeinen Formel I 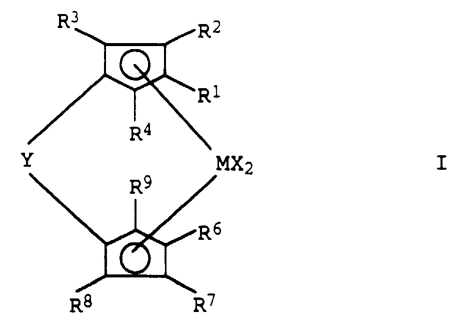 sind diejenigen bevorzugt, in denen die Substituenten folgende Bedeutung haben:
- M: Titan, Zirkonium oder Hafnium,
- X: Chlor oder C₁- bis C₄-Alkyl,
- R¹ bis R³ und R⁶ bis R⁸: Wasserstoff, C₁- bis C₆-Alkyl, Phenyl oder wobei zwei benachbarte Reste gemeinsam für 4 bis 12 C-Atome aufweisende cyclische Gruppen stehen, insbesondere Indenyl, mit C₁- bis C₄-Alkyl substituierte Indenyle und Benzindenyl, vorzugsweise weisen R¹ und R⁶ die gleiche Bedeutung auf, ebenfalls R² und R⁷ sowie R³ und R⁸
- Q¹: Stickstoff, Phosphor oder Arsen
- R¹¹, R¹²: sind vorzugsweise gleich und stehen für C₁- bis C₆-Alkyl oder die beiden Reste stehen gemeinsam für 2 bis 8 C-Atome aufweisende cyclische Gruppen, die ihrerseits 1 bis 6, insbesondere 1 bis 4 Heteroatome der III. bis VI. Hauptgruppe des Periodensystems der Elemente enthalten können, wobei P und N bevorzugt sind
- R⁴: Dimethylamino oder Pyrrolidino
- R⁹: ist vorzugsweise identisch mit R⁴
- Y: 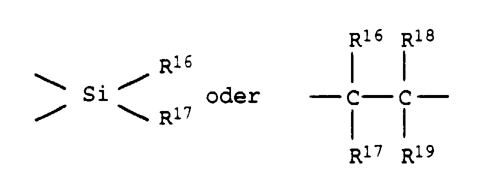
- R¹⁶, R¹⁷, R¹⁸, R¹⁹: Wasserstoff oder C₁- bis C₆-Alkyl.

Besonders bevorzugte Metallocenkomplexe I sind:
Dimethylsilandiyl-bis(2-N,N-dimethylamino-4-tert.butylcyclopentadienyl)zirkondichlorid,
Dimethylsilandiyl-bis(2-N,N-dimethylamino-4-phenylcyclopentadienyl)zirkondichlorid,
Dimethylsilandiyl-bis(2-N,N-dimethylamino-4-isopropylcyclopentadienyl)zirkondichlorid,
Dimethylsilandiyl-bis(2-N,N-dimethylamino-4-tert.butylcyclopentadienyl)titandichlorid,
Dimethylsilandiyl-bis(2-N,N-dimethylamino-4-tert.butylcyclopentadienyl)hafniumchlorid,
Dimethylsilandiyl-bis(2-N,N-dimethylamino-4-tert.butylcyclopentadienyl)zirkondimethyl,
Dimethylsilandiyl-bis(2-N,N-dimethylamino-4-tert.butylcyclopentadienyl)hafniumdimethyl,
Dimethylsilandiyl-bis(2-N,N-dimethylamino-4-tert.butylcyclopentadienyl)titandimethyl,
Dimethylsilandiyl-bis(2-N,N-dimethylaminoindenyl)titandichlorid,
Dimethylsilandiyl-bis(2-N,N-dimethylaminoindenyl)zirkondichlorid,
Dimethylsilandiyl-bis(2-N,N-dimethylaminoindenyl)-hafniumdichlorid,
Dimethylsilandiyl-bis(2-N,N-dimethylaminobenzindenyl)titandichlorid,
Dimethylsilandiyl-bis(2-N,N-dimethylaminobenzindenyl)zirkondichlorid,
Dimethylsilandiyl-bis(2-N,N-dimethylaminobenzindenyl)hafniumdichlorid,
Dimethylsilandiyl-bis(2-Pyrrolidinoindenyl)titandichlorid,
Dimethylsilandiyl-bis(2-Pyrrolidinoindenyl)zirkondichlorid,
Dimethylsilandiyl-bis(2-Pyrrolidinoindenyl)hafniumdichlorid,
Dimethylsilandiyl-bis(2-Pyrrolidinobenzindenyl)titandichlorid,
Dimethylsilandiyl-bis(2-Pyrrolidinobenzindenyl)zirkondichlorid
   und
Dimethylsilandiyl-bis(2-Pyrrolidinobenzindenyl)hafniumdichlorid.

Die Herstellung der Metallocenkomplexe I kann so erfolgen, daß Ligandensysteme II 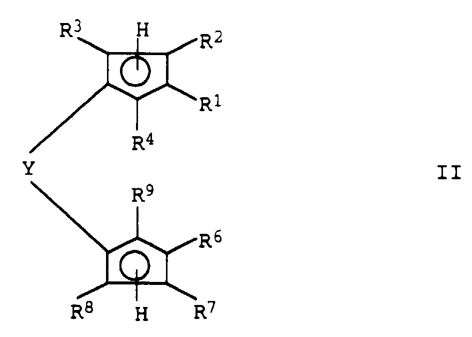 als Zwischenprodukte auftreten. Bezüglich der bevorzugten Substituenten gilt das bei den Metallocenkomplexen I Gesagte.

Ein bevorzugtes Verfahren zur Herstellung der Metallocenkomplexe I und somit auch zur Herstellung der Ligandensysteme II ist folgendes: 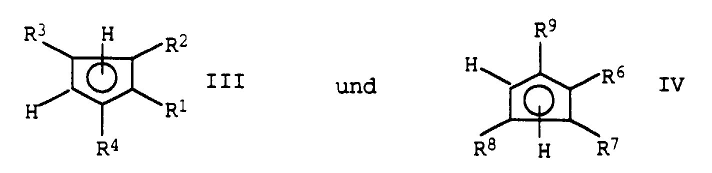 werden mit metallierenden Agenzien wie Alkali- oder Erdalkalialkyle oder -hydride, bevorzugt n-Butyllithium, Methyllithium oder Kaliumhydrid, und anschließend mit Y(X¹)₂ umgesetzt, wobei X¹ für Fluor, Chlor, Brom oder Jod, bevorzugt Chlor, steht und somit erhält man die Ligandensysteme II.

Die Reaktionsbedingungen sind an sich nicht kritisch. Üblicherweise werden III und IV mit organischen Lösungsmitteln wie Ether und/oder Kohlenwasserstoffen, vorzugsweise Diethylether oder Tetrahydrofuran (THF), versetzt und auf Temperaturen von -80°C bis 0°C gekühlt. Dann werden die metallierenden Agenzien, vorzugsweise n-Butyllithium, die bevorzugt mit einem Lösungsmittel wie Hexan versetzt sind, hinzugegeben. Nach Erwärmen auf Raumtemperatur wird Y(X¹)₂, welches ebenfalls mit einem organischen Lösungsmittel wie Diethylether oder THF versetzt ist, hinzugegeben. Die Aufarbeitung erfolgt durch Ausfällen oder Auskristallisieren.

Die Ligandensysteme II können nun ebenfalls mit metallierenden Agenzien wie Alkali- oder Erdalkalialkyle oder -hydride, bevorzugt n-Butyllithium, und anschließend mit MX₄ umgesetzt werden, wobei die Metallocenkomplexe I entstehen.

Die Reaktionsbedingungen zur Herstellung der Metallocenkomplexe I sind ebenfalls nicht kritisch; man arbeitet bevorzugt so, daß II mit organischen Lösungsmitteln wie Ether, bevorzugt Diethylether versetzt auf Temperaturen von -80°C bis 0°C gekühlt wird. Dann werden die metallierenden Agenzien, die bevorzugt mit einem Lösungsmittel wie Hexan versetzt sind, hinzugegeben. Nach Erwärmen auf Raumtemperatur und dem Zusatz von Kohlenwasserstoffen, bevorzugt Pentan, als unpolares Lösungsmittel kann das entsprechende Ligand-Lithiumsalz abgetrennt und isoliert werden. Dieses Ligand-Lithiumsalz wird nun vorzugsweise unter Inertgasatmosphäre mit MX₄ gemischt. Die Auftrennung der angefallenen Isomerengemische in Racemat- und Meso-Form erfolgt durch fraktionierte Kristallisation aus gängigen Lösungsmitteln wie Kohlenwasserstoffe, Ether oder halogenierte Kohlenwasserstoffe oder deren Mischungen.

Die Reaktionsbedingungen in der Stufe b) sind an sich unkritisch. Üblicherweise werden die Metallocenkomplexe I mit einem organischen Lösungsmittel wie aromatische Kohlenwasserstoffe, vorzugsweise Toluol, versetzt und das nach Stufe a) erhaltene Trägermaterial hinzugegeben. Die Menge an Metallocenkomplex, bezogen auf das nach Stufe a) erhaltene Trägermaterial beträgt üblicherweise 0,1 bis 2 Gew.-%, bevorzugt 0,1 bis 1 Gew.-%. Dann kann für einen Zeitraum von 0,5 bis 12 Stunden auf Temperaturen von 30 bis 90°C erwärmt werden und aus der entstandenen Suspension der geträgerte Metallocenkomplex nach Extraktion abgefiltert und getrocknet werden. Bei dem nach der Stufe b) erhaltenen geträgerten Metallocenkomplex liegt die heterofunktionelle Gruppe der Metallocenverbindung zusammen mit dem Trägermaterial als Ionenpaar vor.

In einer dritten Stufe c) wird nun der nach Stufe b) erhaltene geträgerte Metallocenkomplex mit einem quaternisierenden Agens der allgemeinen Formel V

AₐX² V

wobei
- A: C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atome im Arylrest bedeutet,
- X²: Fluor, Chlor, Brom, Jod, SO₃²⁻, SO₄²⁻ oder NO₃⁻,
- a: 1 oder 2,
umgesetzt. Bevorzugte Verbindungen der allgemeinen Formel V sind C₁- bis C₆-Alkylhalogenide, insbesondere Methyljodid, und C₆- bis C₁₀-Arylhalogenide, insbesondere 2,4,6-Trimethylbenzylchlorid.

Die Reaktionsbedingungen sind an sich unkritisch. Üblicherweise erfolgt die Umsetzung so, daß die geträgerten Metallocenkomplexe mit einem organischen Lösungsmittel wie aromatischen Kohlenwasserstoffen, vorzugsweise Toluol, versetzt werden und die quaternisierenden Agenzien bevorzugt bei Raumtemperatur hinzugegeben werden.

Anschließend wird das Lösungsmittel entfernt und der Rückstand getrocknet.

Die Menge an quaternisierendem Agens V bezogen auf das Metallocen I beträgt üblicherweise 1 bis 500 Mol-Äquivalente, bevorzugt 1 bis 200 Mol-Äquivalente.

Gegebenenfalls kann nun in einer weiteren Stufe d) ein Cokatalysator in Form einer offenkettigen oder cyclischen Alumoxanverbindung der allgemeinen Formel VI oder VII 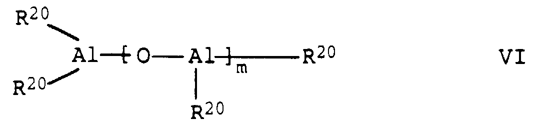 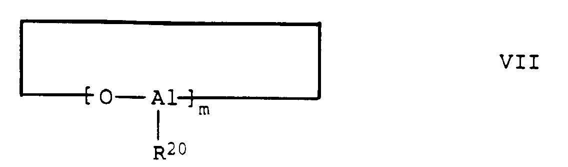 wobei R²⁰ eine C₁- bis C₄-Alkylgruppe, vorzugsweise Methyl- oder Ethylgruppe bedeutet und m für eine ganze Zahl von 5 bis 30, bevorzugt 10 bis 25 steht, zugegeben werden.

Die Herstellung dieser oligomeren Alumoxanverbindungen VI oder VII erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen, vorliegen.

Es hat sich als vorteilhaft erwiesen, die Metallocenkomplexe I und die oligomere Alumoxanverbindung in solchen Mengen zu verwenden, daß das atomare Verhältnis zwischen Aluminium aus der oligomeren Alumoxanverbindung und dem Übergangsmetall aus dem Metallocenkomplex I im Bereich von 10:1 bis 10⁶:1, insbesondere im Bereich von 10:1 bis 10⁴:1, liegt.

Vorzugsweise geht man so vor, daß man das nach Stufe c) erhaltene Material mit einer Lösung der oligomeren Alumoxanverbindung, vorzugsweise in Toluol, versetzt.

Es können jedoch auch Lewis-Säuren als kationenbildende Agenzien bzgl. des Übergangsmetalls aus dem Metallocenkomplex eingesetzt werden, wie in der EP-A 277 003 und der EP-A 277 004 beschrieben.

Die erfindungsgemäßen geträgerten Katalysatorsysteme weisen eine homogene Verteilung des Metallocenkomplexes auf dem Träger auf, sie sind sehr gut rieselfähig und unempfindlich gegenüber Auswaschung der aktiven Katalysatorkomponenten. Sie eignen sich insbesondere zur Herstellung von Polymerisaten von C₂- bis C₁₀-Alk-1-enen.

Unter Polymerisaten von C₂- bis C₁₀-Alk-1-enen sind Homo- oder Copolymerisate von C₂- bis C₁₀-Alk-1-enen, insbesondere von C₂- bis C₆-Alk-1-enen zu verstehen. Bevorzugt sind Homopolymerisate des Ethylens oder des Propylens und Copolymerisate von Ethylen und Propylen, Ethylen und But-1-en, Ethylen und Pent-1-en, Ethylen und Hex-1-en sowie Propylen und But-1-en, Propylen und Pent-1-en wie auch Propylen und Hex-1-en. Der Anteil an Comonomeren kann dabei bis zu 50 Gew.-%, insbesondere bis zu 30 Gew.-% betragen.

Die Polymerisation kann sowohl in Lösung, in einer Suspension, in der Gasphase oder aber als Substanzpolymerisation durchgeführt werden. Bevorzugt wird das Verfahren zur Herstellung der Polymerisate von C₂-C₁₀-Alk-1-enen in Lösung oder in der Gasphase durchgeführt. Die Polymerisationsbedingungen sind an sich unkritisch; Drücke von 0,5 bis 3000 bar, bevorzugt von 1 bis 80 bar und Temperaturen von -50 bis +300°C, bevorzugt von 0 bis 150°C haben sich als geeignet erwiesen. Die Polymerisation kann in Anwesenheit von üblichen Reglern, beispielsweise Wasserstoff oder C₂-C₈-Alk-1-enen und in üblichen Polymerisationsreaktoren durchgeführt werden.

Bei einem bevorzugten Verfahren zur Herstellung von Homopolymerisaten von C₂- bis C₁₀-Alk-1-enen geht man so vor, daß die aktiven Bestandteile des Katalysatorsystems in Toluol bei Temperaturen im Bereich von 0 bis 140°C vorgelegt werden.

Hierzu wird dann über einen Zeitraum von 0,5 bis 12 Stunden das C₂- bis C₁₀-Alk-1-en bei einem Druck von 1 bis 60 bar aufgepreßt. Die Aufarbeitung der Polymerisate erfolgt dann nach üblichen Methoden.

Das beschriebene Verfahren zur Herstellung von Polymerisaten von C₂- bis C₁₀-Alk-1-enen zeichnet sich durch geringen verfahrenstechnischen Aufwand aus.

Die nach dem beschriebenen Verfahren hergestellten Polymerisate von C₂- bis C₁₀-Alk-1-enen weisen ein ausgewogenes Eigenschaftsprofil auf und eignen sich zur Herstellung von Fasern, Folien und Formkörpern.

### Beispiele

### Beispiele 1 bis 3: Herstellung der funktionalisierten Träger nach Stufe a)

### Beispiel 1

2,96 g (≙ 12 mmol) (Chloromethyl)phenyltrimethoxysilan wurden in 40 ml Toluol gelöst und mit 8,28 g Kieselgel der Fa. Baker 2 Stunden bei 115°C am Rückfluß erhitzt. Danach wurden im Vakuum 10 ml der flüchtigen Bestandteile abgezogen und der Rückstand anschließend für eine weitere Stunde bei 115°C am Rückfluß erhitzt. Nach dem Abkühlen wurde filtriert, viermal mit je 40 ml Diethylether gewaschen und 12 Stunden im Hochvakuum getrocknet. Man erhielt 9,61 g des funktionalisierten Trägers, der folgender Nachbehandlung unterworfen wurde:

2,55 g des funktionalisierten Trägers wurden bei 70°C unter Argonatmosphäre mit 15 ml (≙ 120 mmol) Trimethylchlorsilan versetzt. Anschließend wurde zweimal mit je 20 ml Toluol und zweimal mit je 20 ml Diethylether gewaschen und 12 Stunden im Hochvakuum getrocknet. Man erhielt 2,47 g des nachbehandelten funktionalisierten Trägers.

### Beispiel 2

2,98 g (≙ 12,1 mmol) (Chloromethyl)phenyltrimethoxysilan wurden analog zu Beispiel 1 in 40 ml Toluol gelöst und mit 8,09 g Kieselgel 60 der Fa. Merck umgesetzt. Man erhielt 9,20 g des funktionalisierten Trägers, der ebenfalls einer Nachbehandlung unterworfen wurde:

2,45 g des funktionalisierten Trägers wurden analog zu Beispiel 1 nachbehandelt, wobei 2,39 g des nachbehandelten funktionalisierten Trägers entstanden.

### Beispiel 3

5,2 g des 3-Chloropropyl-funktionalisierten Kieselgels der Fa. Aldrich wurden zur Nachbehandlung in 25 ml Toluol suspendiert und mit 1,75 ml (≙ 12,5 mmol) Triethylamin und 12,5 ml (≙ 100 mmol) Trimethylchlorsilan versetzt. Anschließend wurde 60 Stunden am Rückfluß bei 111°C erhitzt und nach dem Abfiltrieren viermal mit je 20 ml Toluol gewaschen und der Rückstand mit 100 ml trockenem Ethanol extrahiert. Das verbliebene Material wurde anschließend bei 80°C im Hochvakuum getrocknet. Man erhielt 4,4 g Produkt. Davon wurden 4,0 g mit 0,4 g (≙ 2,7 mmol) ausgeheiztem Natriumjodid in 50 ml trockenem Aceton versetzt, 12 Stunden am Rückfluß erhitzt und dann filtriert. Der verbliebene Rückstand wurde mit 100 ml Aceton für weitere 12 Stunden am Rückfluß erhitzt und dann mit 100 ml Toluol extrahiert. Man erhielt 4,2 g des nachbehandelten 3-Jodpropyl-funktionalisierten Trägers.

### Beispiele 4 bis 6: Herstellung der geträgerten Metallocenkomplexe nach Stufe b)

Herstellung von Dimethylsilandiylbis(2-N,N-dimethylaminoindenyl)zirkondichlorid I1 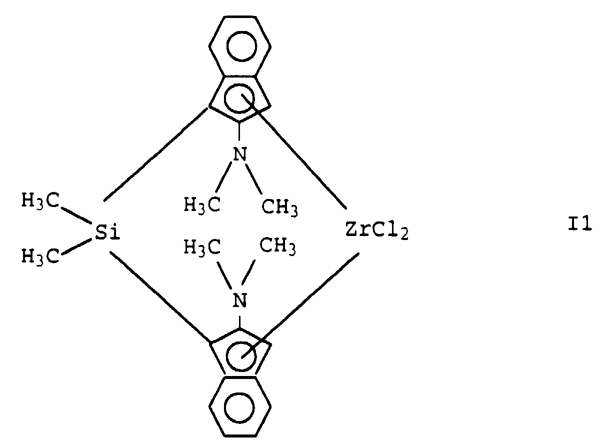
a) Herstellung des Ligandensystems Bis(2-N,N-dimethylaminoindenyl)dimethylsilan II1 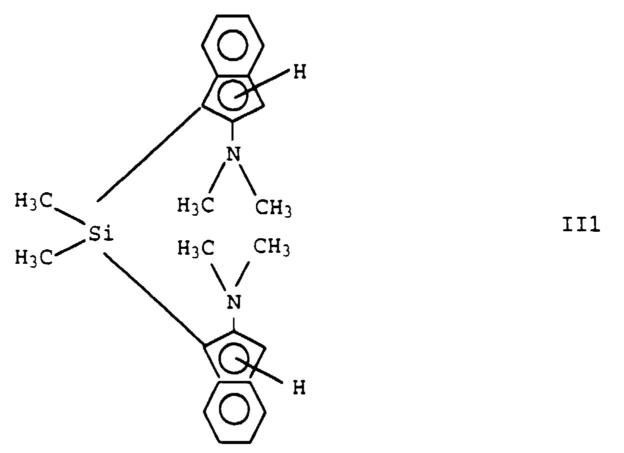 5,69 g (≙ 36 mmol) 2-N,N-Dimethylaminoinden III1 wurden in 100 ml Diethylether gelöst und auf -10°C gekühlt. Hierzu wurden 22,4 ml (≙ 36 mmol) einer 1,6 molaren Lösung von n-Butyllithium in Hexan gegeben und nach dem Auftauen wurde 8 Stunden bei Raumtemperatur gerührt. Anschließend wurden hierzu 2,24 ml (≙ 18 mmol) Dimethyldichlorsilan in 20 ml Diethylether gegeben und weitere 18 Stunden gerührt. Das ausgefallene Lithiumchlorid wurde abfiltriert, das Filtrat auf die Hälfte eingeengt und auf -80°C gekühlt. Dabei fielen 3,24 g (≙ 14 mmol, 48 % d.Th.) II1 als schwach grauer, feinkristalliner Niederschlag an.
¹H-NMR (CDCl₃, δ rel TMS):

| d [ppm] (Mult) | Anzahl | J [Hz] | Zuordnung |
|---|---|---|---|
| - 1.59 (s) | | | |
| - 0.41 (s) | 6 | | |
| - 0.23 (s) | | | Si(CH₃)₃ |
| 2.77 (s) | 12 | 17.7 | N(CH₃)₂ |
| 3.93 (d) | 2 | 16.9 | Fünfring-H |
| 5.63 (d) | 2 | | Fünfring-H |
| 6.8-7.4 (m,breit) | 8 | | Aromat. H |

b) Umsetzung von II1 zu I1
17,56 (≙ 47 mmol) II1 wurden in 250 ml Diethylether gelöst und auf -10°C gekühlt. Hierzu wurden 58,75 ml (≙ 94 mmol) einer 1,6 molaren Lösung von n-Butyllithium in Hexan gegeben. Nachdem die Mischung 2 Stunden bei Raumtemperatur gerührt worden war wurden 100 ml n-Pentan zugegeben, eine weitere Stunde gerührt und anschließend filtriert. Man erhielt 17,21 g (≙ 44,5 mmol, 94,7 % d.Th.) des Ligand-Lithiumsalzes.
3 g (≙ 7,7 mmol) dieses Ligand-Lithiumsalzes wurden mit 1,79 g (≙ 7,7 mmol) ZrCl₄ unter Inertgasatmosphäre trocken gemischt. Hierzu wurden 100 ml Toluol gegeben und die braungelbe Suspension 18 Stunden bei Raumtemperatur gerührt. Die überstehende Lösung wurde abgenommen und am Ölpumpenvakuum zur Trockne eingedampft. Auf diese Weise erhielt man 1 g (≙ 1,8 mmol, 24 % d.Th.) an I1 mit einem Verhältnis an Racemat- zu Meso-Form von 3 : 1.
Der Rückstand aus dem Reaktionsansatz wurde mit 150 ml Methylenchlorid extrahiert, filtriert und auf -80°C gekühlt. Aus dieser Lösung kristallisierten 1,5 g (≙ 2,4 mmol, 36 % d.Th.) an I1. Durch Umkristallisieren aus Methylenchlorid/Diethylether (Vol.-Verhältnis 1 : 9) bei -80°C erhielt man 0,7 g reines rac-I1.
¹H-NMR (CDCl₃, δ rel TMS):

| d [ppm] (Mult) | Anzahl | Zuordnung |
|---|---|---|
| racemische Verb. | | |
| 1.29 (s) | 6 | Si(CH₃)₂ |
| 2.61 (s) | 12 | N(CH₃)₂ |
| 6.39 (s) | 2 | Cp-H |
| 6.74 - 7.55 (m,breit) | 8 | Aromat.-H |

| meso Verb. | | |
|---|---|---|
| 1.32 (s) | 3 | Si(CH₃)₂ |
| 1.36 (s) | 3 | Si(CH₃)₂ |
| 2.80 (s) | 12 | N(CH₃)₂ |
| 6.40 (s) | 2 | Cp-H |
| 6.74-7.55 (m,breit) | 8 | Aromat.-H |

Massenspektrum (E1, 70 eV, 220°C) m/e = 534 (M⁺, 22,3 %), 376 (M⁺ - C₉H₆N(CH₃)₂, 14,9 %).

### Beispiel 4

230 mg (≙ 0,44 mmol) rac-Dimethylsilandiylbis(2-N,N-dimethylaminoindenyl)zirkondichlorid I1 wurden in 50 ml Toluol gelöst, mit 2,16 g des nach Beispiel 1 hergestellten nachbehandelten funktionalisierten Trägers versetzt und 12 Stunden am Rückfluß erhitzt. Anschließend wurde die Suspension mit 50 ml Toluol 12 Stunden extrahiert. Nach Filtration wurde 12 Stunden im Hochvakuum getrocknet. Man erhielt 2,34 g des geträgerten Metallocenkomplexes mit einem Zr-Gehalt von 1,3 %.

### Beispiel 5

544 mg (≙ 1,02 mmol) rac-Dimethylsilandiylbis(2-N,N-dimethylaminoindenyl)zirkondichlorid I1 wurden analog zu Beispiel 4 mit 2,06 g des nach Beispiel 2 hergestellten nachbehandelten funktionalisierten Trägers versetzt. Man erhielt 2,36 g des geträgerten Metallocenkomplexes mit einem Zr-Gehalt von 2,5 %.

### Beispiel 6

500 mg (≙ 0,94 mmol) rac-Dimethylsilandiylbis(2-N,N-dimethylaminoindenyl)zirkondichlorid I1 wurden analog zu Beispiel 4 mit 3,0 g des nach Beispiel 3 hergestellten nachbehandelten funktionalisierten Trägers versetzt. Man erhielt 3,24 g des geträgerten Metallocenkomplexes mit einem Zr-Gehalt von 1,4 %.

### Beispiele 7 bis 9: Umsetzung mit einem quaternisierenden Agens nach Stufe c)

### Beispiel 7

Zu einer Suspension von 2 g des nach Beispiel 4 hergestellten geträgerten Metallocenkomplexes in 30 ml Toluol wurden bei Raumtemperatur 0,1 ml (≙ 1,6 mmol) Methyljodid gegeben. Anschließend wurde das Lösungsmittel im Ölpumpenvakuum entfernt und der verbliebene Rückstand 1 Stunde am Hochvakuum getrocknet. Man erhielt ein gut rieselfähiges Pulver.

### Beispiel 8

Zu einer Suspension von 2 g des nach Beispiel 5 hergestellten geträgerten Metallocenkomplexes in 30 ml Toluol wurden analog zu Beispiel 7 0,1 ml (≙ 1,6 mmol) Methyljodid gegeben.

### Beispiel 9

Zu einer Suspension von 2 g des nach Beispiel 6 hergestellten geträgerten Metallocenkomplexes in 30 ml Toluol wurden analog zu Beispiel 7 0,1 ml (≙ 1,6 mmol) Methyljodid gegeben.

### Beispiele 10 bis 12: Zugabe von Methylalumoxan nach Stufe d)

### Beispiel 10

Das in Beispiel 7 hergestellte gut rieselfähige Pulver (2 g) wurde mit 37 ml (≙ 56 mmol) einer 1,53 molaren Lösung von Methylalumoxan in Toluol (Fa. Witco) in einen trockenen, mit Stickstoff gespülten 10 l Stahlautoklaven gegeben.

### Beispiel 11

Analog zu Beispiel 10 wurde das in Beispiel 8 hergestellte gut rieselfähige Pulver (2 g) mit 71 ml (≙ 109 mmol) einer 1,53 molaren Lösung von Methylalumoxan in Toluol (Fa. Witco) versetzt.

### Beispiel 12

Analog zu Beispiel 10 wurde das in Beispiel 9 hergestellte gut rieselfähige Pulver (2 g) mit 39 ml (≙ 60 mmol) einer 1,53 molaren Lösung von Methylalumoxan in Toluol (Fa. Witco) versetzt.

### Beispiele 13 bis 15: Herstellung von Polypropylen (PP) durch Gasphasenpolymerisation

Die mit den jeweiligen geträgerten Katalysatorsystemen der Beispiele 10, 11 und 12 gefüllten Autoklaven wurden auf 70°C aufgeheizt und der Innendruck stufenweise durch Propylenzufuhr bis zum Enddruck von 28 bar erhöht. Anschließend wurde 1,5 h polymerisiert wobei durch eine automatische Druckregelung Frischpropylen nachgeführt wurde. Nach beendeter Reaktion wurde während 10 Minuten auf Atmosphärendruck entspannt und das entstandene PP im Stickstoffstrom ausgetragen.

Die Ergebnisse sind in der Tabelle zusammengefaßt.

**Tabelle**

| | Bsp. 13 | Bsp. 14 | Bsp. 15 |
|---|---|---|---|
| Ausbeute [g] | 1092 | 2214 | 540 |
| Produktivität [g/g geträgertes Katalysatorsystem] | 546 | 1107 | 270 |
| Produktivität [kg/mol Metallocen] | 3900 | 4100 | 1800 |
| Schmelzpunkt [°C] | 141,2 | 143,9 | 141,8 |
| M_{w} | 160000 | 166000 | 152000 |
| M_{w}:Mₙ | 3,4 | 3,2 | 3,9 |

Die Schmelzpunkte wurden mittels DSC-Messungen (10°/min Aufheizrate) bestimmt. Die Bestimmung der Gewichtsmittelwerte M_{w} und Zahlenmittelwerte Mₙ erfolgte durch Gelpermeationschromatographie.

## Patentansprüche

1. Geträgerte Katalysatorsysteme, erhältlich durch
a) Umsetzung eines feinteiligen Trägers mit einer α-Trisalkoxysilyl-ω-halogenalkyl-Verbindung,
b) Zugabe eines Metallocenkomplexes der allgemeinen Formel I 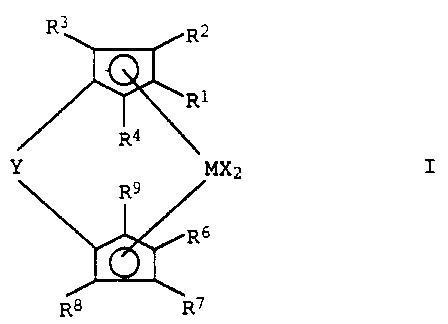 in der die Substituenten folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C₆- bis C₁₅-Aryl oder -OR⁵,
wobei
R⁵ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
R¹ bis R³ und R⁶ bis R⁸ Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁰)₃ mit
R¹⁰ C₁- bis C₁₀-Alkyl, C₆- bis C₁₅-Aryl oder C₃- bis C₁₀-Cycloalkyl,
R⁴ 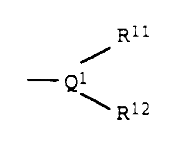
wobei
Q¹ Stickstoff, Phosphor, Arsen, Antimon oder Wismut bedeutet,
R¹¹, R¹² C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest oder die beiden Reste gemeinsam für 2 bis 15 C-Atome aufweisende cyclische Gruppen stehen können, die ihrerseits 1 bis 8 Heteroatome der III. bis VI. Hauptgruppe des Periodensystems der Elemente enthalten können
R⁹ Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R¹³)₃ oder 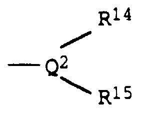
wobei
R¹³ C₁- bis C₁₀-Alkyl, C₆- bis C₁₅-Aryl oder C₃- bis C₁₀-Cycloalkyl bedeutet,
Q² Stickstoff, Phosphor, Arsen, Antimon oder Wismut bedeutet,
R¹⁴, R¹⁵ C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest oder die beiden Reste gemeinsam für 2 bis 15 C-Atome aufweisende cyclische Gruppen stehen können, die ihrerseits 1 bis 8 Heteroatome der III. bis VI. Hauptgruppe des Periodensystems der Elemente enthalten können
Y für 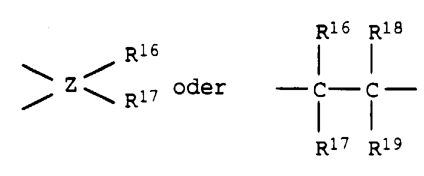
steht, wobei
Z Silicium, Germanium, Zinn oder Kohlenstoff bedeutet,
R¹⁶,R¹⁷,R¹⁸,R¹⁹ Wasserstoff, C₁- bis C₁₀-Alkyl, C₃- bis C₁₀-Cycloalkyl oder C₆- bis C₁₅-Aryl, wobei gegebenenfalls auch zwei benachbarte Reste gemeinsam für 4 bis 15 C-Atome aufweisende cyclische Gruppen stehen können,
c) Umsetzung mit einem quaternisierenden Agens der allgemeinen Formel V
AₐX² V
wobei
A C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atome im Arylrest bedeutet
X² Fluor, Chlor, Brom, Jod, SO₃²⁻, SO₄²⁻ oder NO₃⁻
a 1 oder 2
und
d) gegebenenfalls Zugabe einer offenkettigen oder cyclischen Alumoxanverbindung der allgemeinen Formel VI oder VII 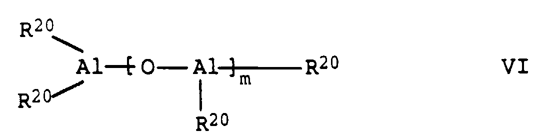 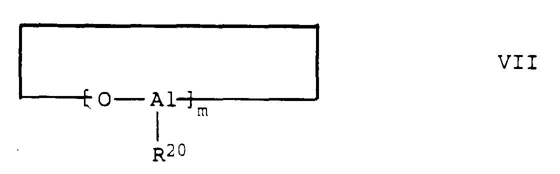 wobei
R²⁰ eine C₁- bis C₄-Alkylgruppe bedeutet und
m für eine ganze Zahl von 5 bis 30 steht,
in der angegebenen Reihenfolge.

2. Verfahren zur Herstellung von geträgerten Katalysatorsystemen gemäß den Verfahrensbedingungen von Anspruch 1.

3. Verwendung von geträgerten Katalysatorsystemen gemäß Anspruch 1 zur Polymerisation von Alkenen.

4. Verfahren zur Herstellung von Polymerisaten von C₂- bis C₁₀-Alk-1-enen bei Drücken von 0,5 bis 3000 bar und Temperaturen von -50 bis 300°C unter Verwendung eines Katalysatorsystems, dadurch gekennzeichnet, daß als Katalysatorsysteme geträgerte Katalysatorsysteme gemäß Anspruch 1 eingesetzt werden.

## Claims

1. A supported catalyst system obtainable by
a) reaction of a finely divided carrier with an α-trisalkoxysilyl-ω-haloalkyl compound,
b) addition of a metallocene complex of the general formula I 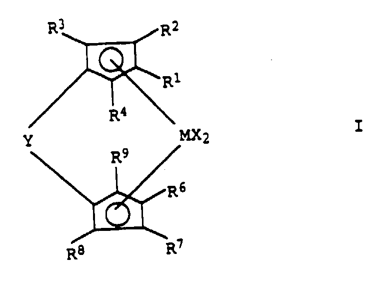 in which the substituents have the following meanings:
M is titanium, zirconium, hafnium, vanadium, niobium or tantalum,
X is fluorine, chlorine, bromine, iodine, hydrogen, C₁-C₁₀-alkyl, C₆-C₁₅-aryl or -OR⁵,
R⁵ is C₁-C₁₀-alkyl, C₆-C₁₅-aryl, alkylaryl, arylalkyl, fluoroalkyl or fluoroaryl, each having 1 to 10 carbon atoms in the alkyl radical and 6 to 20 carbon atoms in the aryl radical,
R¹ to R³ and R⁶ to R⁸ are each hydrogen, C₁-C₁₀-alkyl, 5-membered to 7-membered cycloalkyl which in turn may carry C₁-C₁₀-alkyls as substituents, C₆-C₁₅-aryl or arylalkyl, where two neighboring radicals together may furthermore be cyclic groups of 4 to 15 carbon atoms, or Si(R¹⁰)₃,
R¹⁰ is C₁-C₁₀-alkyl, C₆-C₁₅-aryl or C₃-C₁₀-cycloalkyl,
R⁴ is 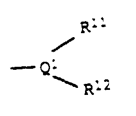
where
Q¹ is nitrogen, phosphorus, arsenic, antimony or bismuth,
R¹¹ and R¹² are each C₁-C₁₀-alkyl, C₃-C₅-cycloalkyl, C₆-C₁₅-aryl, alkylaryl, arylalkyl, fluoroalkyl or fluoroaryl, each having 1 to 10 carbon atoms in the alkyl radical and 6 to 20 carbon atoms in the aryl radical, or the two radicals together may be cyclic groups of 2 to 15 carbon atoms which in turn may contain from 1 to 8 hetero atoms of main groups III to VI of the Periodic Table of Elements,
R⁹ is hydrogen, C₁-C₁₀-alkyl, 5-membered to 7-membered cycloalkyl which in turn may carry C₁-C₁₀-alkyls as substituents, C₆-C₁₅-aryl or arylalkyl, where two neighboring radicals together may furthermore be cvclic groups of 4 to 15 carbon atoms, Si(R¹³)₃ or 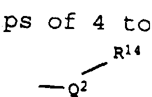
where
R¹³ is C₁-C₁₀-alkyl, C₆-C₁₅-aryl or C₃-C₁₀-cycloalkyl,
Q² is nitrogen, phosphorus, arsenic, antimony or bismuth,
R¹⁴ and R¹⁵ are each C₁-C₁₀-alkyl, C₃-C₁₅-cycloalkyl, C₆-C₁₅-aryl, alkylaryl, arylalkyl, fluoroalkyl or fluoroaryl, each having 1 to 10 carbon atoms in the alkyl radical and 6 to 20 carbon atoms in the aryl radical, or the two radicals together may be cyclic groups of 2 to 15 carbon atoms which in turn may contain from 1 to 8 hetero atoms of main groups III to VI of the Periodic Table of Elements,
Y is 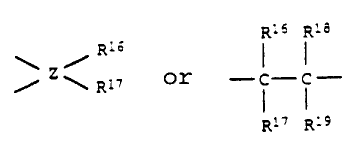
steht, where
Z is silicon, germanium, tin or carbon and
R¹⁶, R¹⁷, R¹⁸ and R¹⁹ are each hydrogen, C₁-C₁₀-alkyl, C₃-C₁₀-cycloalkyl or C₆-C₁₅-aryl, where two neighboring radicals together may furthermore be cyclic groups of 4 to 15 carbon atoms,
c) reaction with a quaternizing agent of the general formula V
AₐX² V
where
A is C₁-C₁₀-alkyl, C₃-C₁₅-cycloalkyl, C₆-C₁₅-aryl, alkylaryl, arylalkyl, fluoroalkyl or fluoroaryl, each having 1 to 10 carbon atoms in the alkyl radical and 6 to 20 carbon atoms in the aryl radical,
X² is fluorine, chlorine, bromine, iodine, SO₃²⁻, SO₄²⁻ or NO₃⁻ and
a is 1 or 2,
and
d) if required, the addition of an open-chain or cyclic alumoxane compound of the general formula VI or VII 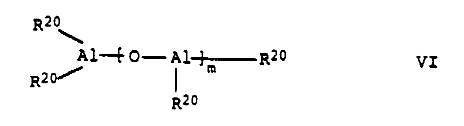 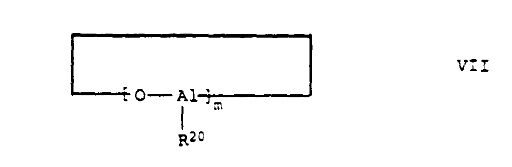 where
R²⁰ is C₁-C₄-alkyl and
m is an integer from 5 to 30,
in the stated order.

2. A process for the preparation of supported catalyst systems under the process conditions of claim 1.

3. Use of supported catalyst systems as claimed in claim 1 for the polymerization of alkenes.

4. A process for the preparation of polymers of C₂-C₁₀-alk-1-enes at from 0.5 to 3,000 bar and from -50 to 300°C using a catalyst system, wherein the catalyst systems employed are supported catalyst systems as claimed in claim 1.

## Revendications

1. Systèmes de catalyseurs déposés sur un support, que l'on obtient par
a) mise en réaction d'un support à grains fins avec un composé d'α-tris-alcoxysilyl-ω-halogénalkyle,
b) addition d'un complexe de métallocène répondant à la formule générale I 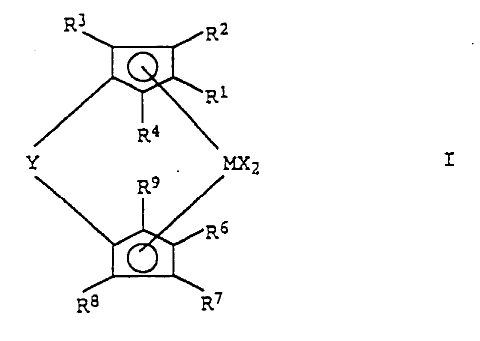 dans laquelle les substituants ont la signification ci-après:
M représente le titane, le zirconium, le hafnium, le vanadium, le niobium ou le tantale,
X représente un atome de fluor, un atome de chlore, un atome de brome, un atome d'iode, un atome d'hydrogène, un groupe alkyle en C₁-C₁₀, un groupe aryle en C₆-C₁₅ ou encore -OR⁵, où
R⁵ représente un groupe alkyle en C₁-C₁₀, un groupe aryle en C₆-C₁₅, un groupe alkylaryle, un groupe arylalkyle, un groupe fluoroalkyle ou un groupe fluoroaryle contenant respectivement de 1 à 10 atomes de carbone dans le radical alkyle et de 6 à 20 atomes de carbone dans le radical aryle,
R¹ à R³ et R⁶ à R⁸ représentent un atome d'hydrogène, un groupe alkyle en C₁-C₁₀, un groupe cycloalkyle penta- à heptagonal qui peut porter à son tour des substituants alkyle en C₁-C₁₀, un groupe aryle ou un groupe arylalkyle en C₆-C₁₅, deux radicaux voisins pouvant le cas échéant également représenter ensemble des groupes cycliques présentant de 4 à 15 atomes de carbone, ou encore Si(R¹⁰)₃, où
R¹⁰ représente un groupe alkyle en C₁-C₁₀, un groupe aryle en C₆-C₁₅ ou un groupe cycloalkyle en C₃-C₁₀,
R⁴ représente 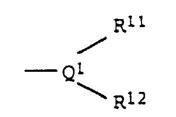 où
Q¹ représente l'azote, le phosphore, l'arsenic, l'antimoine ou le bismuth,
R¹¹, R¹² représentent un groupe alkyle en C₁-C₁₀, un groupe cycloalkyle en C₃-C₁₅, un groupe aryle en C₆-C₁₅, un groupe alkylaryle, un groupe arylalkyle, un groupe fluoroalkyle ou un groupe fluoroaryle contenant respectivement de 1 à 10 atomes de carbone dans le radical alkyle et de 6 à 20 atomes de carbone dans le radical aryle, ou bien les deux radicaux peuvent représenter ensemble des groupes cycliques présentant de 2 à 15 atomes de carbone, qui peuvent contenir quant à eux de 1 à 8 hétéroatomes du groupe principal III à VI du tableau périodique des éléments,
R⁹ représente un atome d'hydrogène, un groupe alkyle en C₁-C₁₀, un groupe cycloalkyle penta- à heptagonal qui peut porter à son tour des substituants alkyle en C₁-C₁₀, un groupe aryle ou un groupe arylalkyle en C₆-C₁₅, deux radicaux voisins pouvant le cas échéant également représenter ensemble des groupes cycliques présentant de 4 à 15 atomes de carbone, Si(R¹³)₃ ou 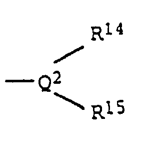 où
R¹³ représente un groupe alkyle en C₁-C₁₀, un groupe aryle en C₆-C₁₅ ou un groupe cycloalkyle en C₃-C₁₀,
Q2 représente l'azote, le phosphore, l'arsenic, l'antimoine ou le bismuth,
R¹⁴, R¹⁵ représentent un groupe alkyle en C₁-C₁₀, un groupe cycloalkyle en C₃-C₁₅, un groupe aryle en C₆-C₁₅, un groupe alkylaryle, un groupe arylalkyle, un groupe fluoroalkyle ou un groupe fluoroaryle contenant respectivement de 1 à 10 atomes de carbone dans le radical alkyle et de 6 à 20 atomes de carbone dans le radical aryle, ou bien les deux radicaux peuvent représenter ensemble des groupes cycliques présentant de 2 à 15 atomes de carbone, qui, quant à eux, peuvent contenir de 1 à 8 hétéroatomes du groupe principal III à VI du tableau périodique des éléments
Y représente 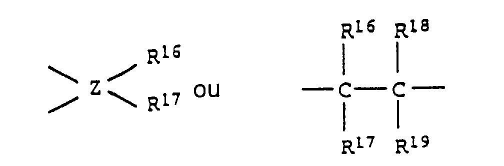 où
Z représente le silicium, le germanium, l'étain ou le carbone,
R¹⁶, R¹⁷, R¹⁸, R¹⁹ représentent un atome d'hydrogène, un groupe alkyle en C₁-C₁₀, un groupe cycloalkyle en C₃-C₁₀ ou un groupe aryle en C₆-C₁₅, deux radicaux voisins pouvant, le cas échéant, également représenter ensemble des groupes cycliques présentant de 4 à 15 atomes de carbone,
c) mise en réaction avec un agent de quaternisation répondant à la formule générale V
AₐX² V
dans laquelle
A représente un groupe alkyle en C₁-C₁₀, un groupe cycloalkyle en C₃-C₁₅, un groupe aryle en C₆-C₁₅, un groupe alkylaryle, un groupe arylalkyle, un groupe fluoroalkyle ou un groupe fluoroaryle contenant respectivement de 1 à 10 atomes de carbone dans le radical alkyle et de 6 à 20 atomes de carbone dans le radical aryle,
X² représente un atome de fluor, un atome de chlore, un atome de brome, un atome d'iode, SO₃²⁻, SO₄²⁻ ou NO₃⁻,
a représente 1 ou 2,
et
d) addition éventuellement d'un composé d'alumoxane à chaîne ouverte ou cyclique répondant aux formules générales VI ou VII 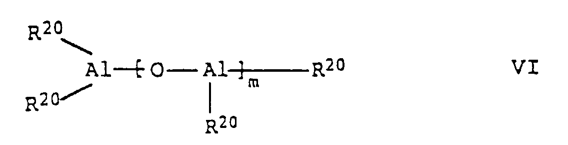 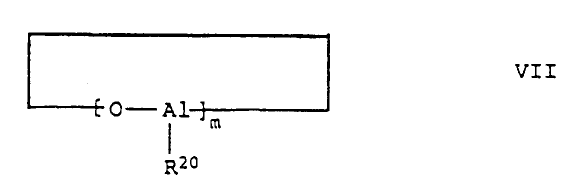 dans lesquelles
R²⁰ représente un groupe alkyle en C₁-C₄ et
m représente un entier de 5 à 30
dans l'ordre indiqué.

2. Procédé pour la préparation de systèmes de catalyseurs déposés sur un support en respectant les conditions opératoires de la revendication 1.

3. Utilisation de systèmes de catalyseurs déposés sur un support selon la revendication 1 pour la polymérisation d'alcènes.

4. Procédé pour la préparation de polymères d'alc-1-ènes en C₂-C₁₀ sous des pressions de 0,5 à 3000 bar et à des températures de -50 à 300°C en utilisant un système de catalyseur, caractérisé en ce qu'on met en oeuvre comme systèmes de catalyseurs, des systèmes de catalyseurs déposés sur un support selon la revendication 1.
